Europäisches Patentamt

European Patent Office

Office européen des brevets

(19)

(11) Veröffentlichungsnummer: **0 213 561**
**B1**

(12) **EUROPÄISCHE PATENTSCHRIFT**

(45) Veröffentlichungstag der Patentschrift:
14.11.90

(51) Int. Cl.⁵: **G11B 7/08, G11B 7/09**

(21) Anmeldenummer: 86111592.1

(22) Anmeldetag: 21.08.86

(54) **Positioniereinrichtung für einen optischen Plattenspeicher.**

(30) Priorität: 27.08.85 DE 3530609

(43) Veröffentlichungstag der Anmeldung:
11.03.87 Patentblatt 87/11

(45) Bekanntmachung des Hinweises auf die Patenterteilung:
14.11.90 Patentblatt 90/46

(84) Benannte Vertragsstaaten:
DE FR GB IT

(56) Entgegenhaltungen:
EP-A- 0 115 666
FR-A- 2 335 861
GB-A- 1 534 025
GB-A- 2 071 359
US-A- 3 737 877

IBM TECHNICAL DISCLOSURE BULLETIN, Band 15,
Nr. 2, Juli 1972, Seiten 494,495, Armonk, New York, US;
R.L. GARWIN: "Optics for beam addressable files"
PATENTS ABSTRACTS OF JAPAN, Band 9,
Nr. 24 (P-331)[1747], 31. Januar 1985; &
JP-A-59 168 942 (MATSUSHITA DENKI SANGYO
K.K.) 22-09-1984
PATENTS ABSTRACTS OF JAPAN, Band 3,
Nr. 18 (E-91), 16. Februar 1979, Seite 128 E 91; &
JP-A-53 147 507 (NIPPON DENSHIN DENWA
KOSHA) 22-12-1978

(73) Patentinhaber: Siemens Aktiengesellschaft,
Wittelsbacherplatz 2, D-8000 München 2(DE)

(72) Erfinder: Gottfried, Norbert, Dr. rer. nat.,
Schumannstrasse 30, D-8011 Baldham(DE)

## Beschreibung

Die Erfindung bezieht sich auf eine Positioniereinrichtung für einen optischen Plattenspeicher gemäß dem Oberbegriff des Hauptanspruches.

Bei Plattenspeichern, ob bei magnetischen Plattenspeichern oder auch optischen Speichern, spielen die Eigenschaften der jeweiligen Positioniereinrichtung schon immer eine wesentliche Rolle. Technologische Fortschritte ermöglichten die Erhöhung der Speicherkapazität, hier interessiert insbesondere die Erhöhung der Spurdichte, zugleich wurden aber auch alle Anstrengungen unternommen, die mittlere Zugriffszeit zu verkürzen, um die Leistungsfähigkeit des jeweiligen Plattenspeichers zu erhöhen.

Es hat daher nicht an Versuchen gefehlt, die an sich gegenläufigen Forderungen nach kurzer Zugriffszeit und hoher Spurdichte zu erfüllen. Bei einem Positioniersystem wird normalerweise immer eine bewegte Masse auftreten, die in einer im wesentlichen radial zu der Speicherplatte bewegten Abtasteinheit verkörpert ist. Insbesondere bei magnetischen Plattenspeichern ist es durch Fortschritte in der Technologie, vor allem auch bei den Magnetköpfen, gelungen, die notwendigerweise zu bewegende Masse wesentlich herabzusetzen und damit auch schnellere Positioniersysteme zu schaffen. Bei optischen Speichern besteht insofern eine andere technologische Grenze, da es hier schon wegen der optischen Abbildungssysteme weit schwieriger ist, die bewegte Masse zu reduzieren.

Relativ hohe Zugriffsgeschwindigkeit, d. h. eine schnelle Radialbewegung der Positioniereinrichtung bei Spurwechseln läßt sich außerdem bekanntlich leichter mit einer mehrstufig ausgeführten Positioniereinrichtung erreichen. Dabei erfolgt zunächst eine Grobpositionierung der Abtasteinheit, sei es magnetischer Schreib/Lesekopf oder optischer Abtaster, auf einen Spurbereich möglichst nahe der auszuwählenden Datenspur oder auf die selektierte Datenspur selbst. Daran schließt sich eine Feinpositionierung an, die die Abtasteinheit auf die ausgewählte Spur einstellt und/oder diese Spurlage hält. Diese Aufteilung des Positioniervorganges in zwei Schritte mit einer hohen Translationsgeschwindigkeit in der ersten Phase und einer präzisen Feineinstellung in der zweiten Phase erlaubt im Mittel eine unter den gegebenen Randbedingungen optimierte Zugriffszeit unter Verwendung zweier Regelsysteme.

Optische Datenspeicher werden heute noch vielfach nur für Archivierungszwecke eingesetzt, so daß hier das Problem der mittleren Zugriffszeit bei fortlaufendem Lesen großer Datenmenge noch eine nicht so ausschlaggebende Rolle spielt. Sollen aber optische Datenspeicher mit magnetischen Plattenspeichern konkurrieren, d.h. auch optische Speicher für Betriebsarten mit häufigen Spurwechseln einsetzbar sein, dann müssen auch bei diesen Datenspeichern sehr kurze Zugriffszeiten ermöglicht werden.

Auch für optische Datenspeicher ist es in diesem Zusammenhang bekannt, die Positioniereinrichtung so aufzubauen, daß damit eine mehrstufige Positionierung möglich wird. So ist beispielsweise aus US-A 3 737 877 eine Positioniereinrichtung gemäß dem Oberbegriff des Hauptanspruches für einen optischen Datenspeicher bekannt, bei der stufenweise zunächst eine Grobpositionierung und anschließend eine Feinpositionierung zur Spurauswahl durchgeführt wird. Dazu ist eine Einrichtung zur Strahlführung vorgesehen, die aus einem schwenkbaren Spiegel und einer Mehrzahl von Reflektorflächen besteht. Damit ist der Laserstrahl selektiv in eines von mehreren parallelen Abtaststrahlbündeln umsetzbar. Die Feinpositionierung erfolgt mit Hilfe einer Abtasteinheit, die neben einem linear ausgedehnten Umlenkspiegel eine Mehrzahl von zeilenförmig angeordneten, den gesamten Spurbereich der Speicherplatte überdeckenden Abtastlinsen aufweist. Die bekannte Positioniereinheit hat den Vorteil, daß die maximale Auslenkung der Abtasteinheit lediglich so groß zu bemessen ist, daß bei der Feinpositionierung ein Spurbereich zu überstreichen ist. Sie erkauft diesen Vorteil aber mit einer relativ hohen Masseträgheit der Abtasteinheit, die durch die Ausdehnung des Umlenkspiegels und die Mehrzahl von Abtastlinsen bedingt ist.

Eine im Prinzip ähnliche Konfiguration für einen optischen Speicher mit einer gemeinsamen, aus einer Vielzahl von Abbildungsoptiken aufgebauten Abtasteinheit ist weiterhin aus IBM Technical Disclosure Bulletin, Bd. 15, No. 2, Juli 1972 bekannt. Auch für diese Lösung gelten die obengenannten Vor- und Nachteile.

Der vorliegenden Erfindung liegt daher die Aufgabe zugrunde, eine Positioniereinrichtung für einen optischen Plattenspeicher der eingangs genannten Art derart weiterzubilden, daß neben präziser Spurhaltung auch wesentlich kürzere Zugriffszeiten ermöglicht werden.

Diese Aufgabe wird erfindungsgemäß bei einer Positioniereinrichtung der eingangs genannten Art durch die im Kennzeichen des Hauptanspruches beschriebenen Merkmale gelöst.

Mit dieser Lösung wird erreicht, das Produkt aus Masse und Beschleunigung bei den beweglichen Teilen der Positioniereinrichtung weitgehend zu reduzieren. Einerseits ist dadurch die Massenträgheit der Positioniereinrichtung wesentlich unproblematischer, andererseits wird aber auch das Regelsystem wesentlich vereinfacht, da der auszuregelnde Bereich jeweils nur einen Bruchteil des gesamten Speicherbereiches betrifft. Dies gilt hinsichtlich des mechanischen Aufbaus, denn die Abtasteinheiten können als im wesentlichen ortsfeste Einheiten angesehen werden, die radial nur in einem beschränkten Maße verschiebbar sein müssen. Dafür kann man andere, einfachere Konstruktionsprinzipien verwenden, als bei einer Ausführung, bei der eine einzige Abtasteinheit, die den gesamten Speicherbereich der Speicherplatte überdeckt, radial verschiebbar sein muß. Dies gilt aber auch hinsichtlich der Feststellung der Istwerte während des Regelvorganges bei der Feinpositionierung und der daraus abzuleitenden Stellgröße, da dieses Regelsystem hochpräzise, d.h. möglichst feinstufig und trägheitslos nur im Hinblick auf einen schmalen Spurbereich funktionsfähig sein muß, dessen Breite von der Anzahl der vorgesehenen Abtasteinheiten abhängt.

Dabei beinhaltet dieses Konzept eine große Flexibilität, d. h. für ein gewähltes Speichermodell sind, abhängig von anderen Randbedingungen, jeweils Möglichkeiten gegeben, die Breite der die Feinpositionierung bestimmenden Spurbereiche durch eine entsprechende Anzahl von Abtasteinheiten an den Anwendungsfall angepaßt festzulegen. Weitere Vorteile und Weiterbildungen der Erfindung ergeben sich aus den Unteransprüchen und sind in der nachfolgenden Darstellung eines Ausführungsbeispieles beschrieben.

Ein Ausführungsbeispiel der Erfindung wird im folgenden anhand der Zeichnung näher erläutert. Dabei zeigt:

Fig. 1 in einer dreidimensionalen Darstellung das Prinzip eines optischen Plattenspeichers mit der entsprechenden Positioniereinrichtung, die eine Mehrzahl von selektiv auswählbaren Abtasteinheiten aufweist,

Fig. 2 die schematische Darstellung des Aufbaus einer solchen Abtasteinheit,

Fig. 3 in analoger Weise den schematischen Aufbau einer Fokussieroptik, die die Notwendigkeit für eine Vertikalbewegung der Abtasteinheiten zur Fokussierung des Laserlichtstrahles auf der Speicherplatte eliminiert und

Fig. 4 eine weitere Ausführungsform einer gestellfesten Fokussiereinrichtung.

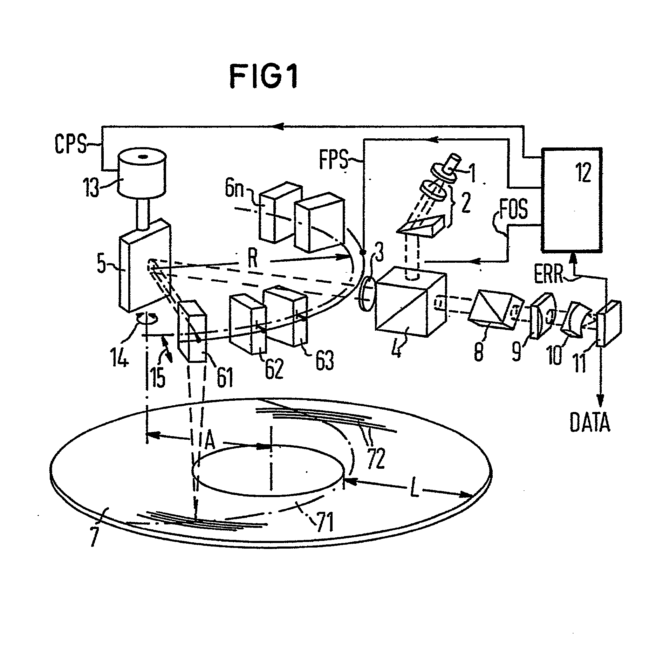

In Fig. 1 ist als Lichtquelle für den optischen Plattenspeicher eine Laserdiode 1 dargestellt, die polarisiertes Licht ausstrahlt. Dieses Licht wird, wie schematisch angedeutet, von einem optischen System 2 zum Bündeln des Lichtstrahles, bestehend aus einem Prisma und einer Kollimatorlinse, gebündelt. Das nun parallele Lichtbündel wird einem Strahlteiler 4 zugeführt und von dort über eine noch näher zu beschreibende Fokussieroptik 3 und einen Drehspiegel 5 auf eine von mehreren Abtasteinheiten 6n abgelenkt. Dabei bestimmt die Winkelstellung des Drehspiegels 5, welche der Abtasteinheiten 6n ausgewählt wird. Die ausgewählte Abtasteinheit enthält eine noch näher zu beschreibende Abbildungsoptik, die das parallele Lichtbündel auf die Oberfläche einer Speicherplatte 7 fokussiert.

Bei einem Lesevorgang wird das von der Oberfläche der Speicherplatte 7 reflektierte Licht über die ausgewählte Abtasteinheit 6n, den Drehspiegel 5 und die Fokussieroptik 3 wieder von dem Strahlteiler 4 empfangen und nun wegen der anderen Ausbreitungsrichtung aus dem beschriebenen Strahlengang ausgeblendet. Dieser ausgeblendete Lichtstrahl wird über ein optisches Empfangssystem ausgewertet, um daraus die gespeicherte Information in Form von Lesedaten DATA bzw. Fehlersignale ERR als Steuerinformation für die Positioniereinrichtung zu gewinnen.

Entsprechend der in Fig. 1 gewählten Darstellung enthält das optische Auswertungssystem einen Wollaston- oder Rochon Polarisator 8, der das empfangene Licht in zwei linear polarisierte Teilstrahlen mit zueinander senkrechten Polarisationsebenen aufspaltet. Im vorliegenden Fall werden beide Teilstrahlen durch eine Sammellinse 9 in Verbindung mit einer Zylinderlinse 10 auf eine Detektoranordnung 11 in zwei örtlich zueinander versetzten Bildpunkten abgebildet. Die Detektoranordnung 11 kann in bekannter Weise zwei Vier-Quadranten-Fotodetektoren enthalten, deren einzelne Detektorflächen, in geeigneter Weise miteinander kombiniert, es gestatten, die Lesedatensignale DATA und die Fehlersignale ERR als Steuersignale für ein Spurfolge- bzw. ein Fokussiersystem der Positioniereinrichtung abzuleiten.

Die Fehlersignale ERR werden als Regelgrößen einer schematisch angedeuteten Steuereinheit 12 zugeführt, die drei Arten von weiteren Steuersignalen als Stellgrößen für die Positioniereinrichtung abgibt. Bei diesen Stellgrößen handelt es sich einmal um ein Grobpositioniersignal CPS, außerdem ein Feinpositioniersignal FPS und schließlich ein Fokussteuersignal FOS.

Das Grobpositioniersignal CPS wird einer Stelleinrichtung 13 für den Drehspiegel 5 zugeführt. Diese Stelleinrichtung 13 kann beispielsweise als Drehmagnetanordnung ausgebildet sein, der das Grobpositioniersignal CPS als statisches Signal zugeführt wird, das eine bestimmte Winkellage des Drehmagneten definiert. Eine andere Möglichkeit der Ausgestaltung der Stelleinrichtung 13 wäre beispielsweise ein Schrittmotor, der direkt über ein digitales Grobpositioniersignal CPS bzw. über ein analog/digital gewandeltes Grobpositioniersignal CPS angetrieben wird.

Wie schematisch in Fig. 1 mit den Pfeilen 14 angedeutet ist, bestimmt die so festgelegte Winkellage der Stelleinrichtung 13 die Drehposition des Drehspiegels 5, der damit einen vom Strahlteiler 4 empfangenen Lichtstrahl auf die so ausgewählte Abtasteinheit ablenkt, die hier in der Darstellung die Abtasteinheit 61 sein soll. Fig. 1 zeigt schematisch, daß n Abtasteinheiten vorgesehen sind, die in einer zur Speicherplatte 7 horizontalen Ebene auf einem Kreisabschnitt bezüglich des Drehspiegels 5 in regelmäßiger Teilung angeordnet sind.

Von der Geometrie her liegt die Achse des Drehspiegels 5 parallel zur Drehachse der Speicherplatte 7 mit einem definierten seitlichen Abstand A. Die Abtasteinheiten 6n sind, dem Drehspiegel 5 zugewandt, auf einem Kreisabschnitt mit dem Radius R in einer regelmäßigen Teilung angeordnet, so daß sich die auf der Speicherplatte 7 schematisch angegebene Spurlinie 71 ergibt, die das gesamte Datenband mit den schematisch angedeuteten Datenspuren 72 überstreicht.

Die dritte, die Geometrie der Positioniereinrichtung bestimmende Größe ist die Anzahl n der Abtasteinheiten 6n. Wie eine einfache Überlegung ergibt, läßt sich mit dieser Anordnung bei n Abtasteinheiten die volle Breite des Datenbandes auf der Speicherplatte 7 überdecken, wenn das Datenband in n Spurbereiche unterteilt wird, die mindestens s/n Datenspuren umfassen, wobei s die Gesamtzahl der Spuren im Datenbereich der Speicherplatte 7 sein möge.

Diese Geometrie der Positioniereinrichtung legt einen minimalen radialen Hub der Abtasteinheiten 6n fest, der in Fig. 1 mit den Pfeilen 15 angedeutet ist. Offensichtlich ist der Hub einer einzelnen Abtasteinheit, z. B. 61 wesentlich geringer als die gesamte Breite des Datenbandes der Speicherplatte 7, solange n entsprechend groß ist. Bezeichnet man mit L die Wegdifferenz zwischen der äußersten Plattenspur, in Fig. 1 schematisch vereinfacht mit dem Rand der Speicherplatte 7 zusammenfallend betrachtet, und der innersten Datenspur, dann entspricht der radiale Hub einer einzelnen Abtasteinheit z. B. 61 dem Quotienten von L/n. Wie sich leicht überlegen läßt, benötigt man maximal als Zeit für die Spurauswahl $t_{sp}$, d. h. für die Hubbewegung der selektierten Abtasteinheit ist durch Beziehung (1) festgelegt:

$$t_{sp} = 2 \sqrt{\left|\frac{L}{b}\right|} \cdot \sqrt{\frac{1}{n}}$$

Für den Verlauf der Geschwindigkeit der Hubbewegung ist dabei ein Dreieckprofil vorausgesetzt.

Dabei bezeichnet $|b|$ die Beschleunigung bzw. Verzögerung der ausgelenkten Abtasteinheit, die man hier vereinfacht als Konstante betrachten kann.

Wie Fig. 1 schematisch andeutet, wird diese Hubbewegung einer selektierten Abtasteinheit durch das Feinpositioniersignal FPS als Stellgröße gesteuert, die in der Regelschleife den Wert 0 annimmt, sobald die vorbestimmte Spur mit bekannten Methoden gefunden ist und gehalten wird.

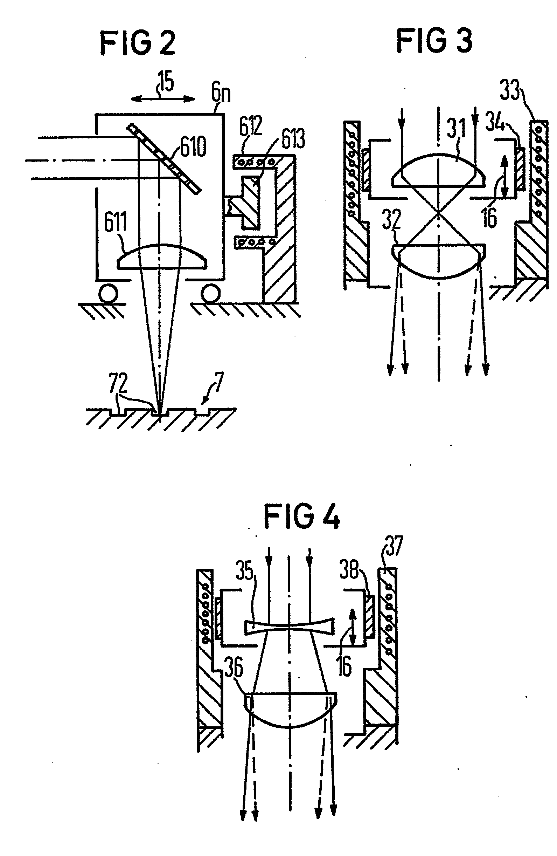

In Fig. 2 ist schematisch der Aufbau einer solchen Abtasteinheit 6n dargestellt. Als optisches System enthält die Abtasteinheit einen unter 45° geneigten Ablenkspiegel 610, der den in horizontaler Richtung empfangenen Lichtstrahl in einen vertikal verlaufenden Lichtstrahl ablenkt und eine Abbildungsoptik 611, die das parallele Licht auf die Oberfläche der Speicherplatte 7 in einer Datenspur 72 fokussiert.

Wie in Fig. 2 vereinfacht dargestellt ist, soll dieses optische Abbildungssystem in Richtung der den Hub der Abtasteinheit bezeichnenden Pfeile 15 verschiebbar sein. Insbesondere wegen des relativ kurzen Hubes läßt sich dies sehr gut z. B. durch eine Tauchspulanrodnung realisieren, bei der der die wesentliche Masse darstellende Tauchspulmagnet 612 ortsfest angeordnet ist und der dazu bewegliche Anker 613 mit der linear verschiebbaren Abtasteinheit 6n fest verbunden ist.

Normalerweise ist der konventionelle Abtastkopf bei optischen Datenspeichern auch in einer vertikalen Richtung, d. h. senkrecht zur Speicherplatte verschiebbar, um den Fokus des Laserlichtstrahles in der aktiven Oberfläche der Speicherplatte 7 zu halten. Bei der hier im vorstehenden beschriebenen geometrischen Anordnung der Abtasteinheiten 6n auf einem Kreisabschnitt um den Drehpunkt des Drehspiegels 5 bietet sich die vorteilhafte Möglichkeit, die Fokussierung des Laserstrahles auf die Speicherplatte 7 mit Hilfe einer gestellfesten Optik einzustellen und nachzuregulieren.

Dazu ist die bereits erwähnte Fokussieroptik 3 im Strahlengang vorgesehen, die vereinfacht in Fig. 3 und 4 nochmals genauer in zwei Ausführunsformen dargestellt ist. Diese Fokussieroptik besteht, vom optischen System her betrachtet, aus einer Anordnung von zwei sammelnden Abbildungselementen 31, 32, die bei der in Fig. 3 dargestellten Ausführungsform eine reelle Zwischenabbildung erzeugen bzw. aus einem zerstreuenden Abbilddungselement 35 und einem sammelndem Abbildungselement 36 mit virtueller Zwischenabbildung, wie in Fig. 4 dargestellt. Die Abbildungselemente 32 bzw. 36 sind hier ortsfest angenommen, während die Elemente 31 bzw. 35 in Richtung des Strahlengangs verschiebbar sein sollen.

Diese lineare Bewegung läßt sich beispielsweise wieder mit einem Tauchspulsystem realisieren, bei dem ein Tauchspulmagnet 33 bzw. 37 ortsfest angeordnet ist und der dazugehörige Anker 34 bzw. 38 fest mit der Fassung der Elemente 31, 35 verbunden ist. Gesteuert wird dieses Tauchspulsystem 33, 34 bzw. 37, 38 durch das erwähnte Fokussteuersignal FOS.

Die beweglichen Teile der beschriebenen Fokussieroptiken haben also eine geringe Masse und optisch gesehen wird durch die Verschiebung einer der beiden Linsen gegenüber der anderen die Divergenz des ausgehenden Lichtstrahles verändert. Eine solche Veränderung der Divergenz des Lichtstrahles führt zu einer vertikalen Verlagerung des Fokus bezüglich einer Datenspur 72, so daß damit tatsächlich eine vertikale Nachführung der Abtasteinheiten 6n überflüssig ist.

In den vorstehend beschriebenen Ausführungsbeispielen wurde insbesondere auf die Geometrie der Anordnung Wert gelegt, die sowohl die optischen als auch die mechanischen Eigenschaften der Positioniereinrichtung und damit letztlich auch damit erzielbare kurze Zugriffszeit bestimmt. Soweit es die elektronische Steuerung einer solchen Positioniereinrichtung betrifft, können dafür bekannte Prinzipien für die Ableitung der Fehlersignale für das Spurfolge- und Fokussiersystem eingesetzt werden und dementsprechend auch elektronische Steuerungen in angepaßter Weise verwendet werden. Diese sind daher vorstehend nur zusammenfassend beschrieben.

Es ist jedoch darauf hinzuweisen, daß die exakte Trennung der Grobpositionierung von der Feinpositionierung auch bezüglich der dazu verwendeten mechanischen bzw. optischen Einheiten neue Möglichkeiten bietet, die Steuerung des Positioniervorganges flexibler als bisher zu gestalten. Für die Grobpositionierung bedarf es tatsächlich nur eines Steuervorganges, denn an sich ist es für diese Phae der Positionierung nur von ganz untergeordneter Bedeutung, an welcher Stelle eine zu selektierende Abtasteinheit bezüglich des ihr zugeordneten Spurbereiches momentan steht. Die parallele Verwendung mehrerer Abtasteinheiten erlaubt es, beispielsweise im Zeitmultiplex, die Istlagen aller Abtasteinheiten simultan festzustellen und zu aktualisieren.

Bei einer entsprechenden Organisation und Steuerung der Lese- und gegebenenfalls auch der Schreib/Lesevorgänge im optischen Plattenspeicher wäre es so denkbar, alle nicht aktivierten Abtasteinheiten in eine vorgegebene Ausgangsposition zu führen, so daß jeder Feinpositionierungsvorgang immer von derselben Voraussetzung ausgeht. Es wäre aber auch möglich, die Istlage der Abtasteinheit in der Steuereinheit zwischenzuspeichern und damit im Verbindung mit einer extern zugeführten Adresseninformation über eine neue auszuwählende Datenspur neben der Grobpositionierung die Feinpositionierung zu steuern. In diesem Zusammenhang wäre es ebenso denkbar, falls dies vom Betriebsablauf der Steuerung her möglich ist, gegebenenfalls bereits vor einem beabsichtigten Spurwechsel, bei dem eine andere Abtasteinheit zu aktivieren ist, diese Abtasteinheit schon vorab einzustellen, um die Verzögerungszeit noch weiter zu verringern. Diese Möglichkeiten sind hier nur angedeutet, um an diesen Beispielen die Anpassungsfähigkeit und mögliche Leistungsreserven der beschriebenen Positioniereinrichtung zu demonstrieren.

Bezugszeichenliste

    1 Laserdiode
    2 optisches System zum Bündeln des Laserlichtes
    3 Fokussieroptik
    4 Strahlteiler
    5 Drehspiegel
    6n Abtasteinheiten 61 ... 6n
(n = Anzahl)
    7 Speicherplatte
    DATA Lesedatensignale
    ERR Fehlersignale
    8 Polarisator
    9 Sammellinse
    10 Zylinderlinse
    11 Detektoranordnung
    12 Steuereinheit
    CPS Grobpositioniersignal
    FPS Feinpositioniersignal
    FOS Fokussteuersignal
    13 Stelleinrichtung für Drehspiegel
    14 Pfeile für Winkeldrehung der Stelleinrichtung
    A Achsabstand Drehspiegel, zur Speicherplatte
    71 Spurlinie
    72 Datenspuren
    s Gesamtzahl der Datenspuren
    15 Pfeile für Hub der Abtasteinheit
    L Wegdifferenz zwischen äußerster und innerster Datenspur
    $t_{sp}$ Zeit für Spurauswahl
    610 Ablenkspiegel
    611 Abbildungsoptik
    612 Tauchspulmagnet
    31 bzw.35 1. Abbildungselement der Fokussieroptik
    32 bzw. 36 2. Abbildungselement der Fokussieroptik
    33, 34 bzw.
37, 38 Tauchspulanordnung der Fokussieroptik

## Patentansprüche

1. Positioniereinrichtung für einen optischen Plattenspeicher, bei der der Lichtstrahl einer Laserlichtquelle (1) auf eine ausgewählte Datenspur (72) einer optischen Speicherplatte (7) fokussiert wird, die in n konzentrische, jeweils eine Mehrzahl von Datenspuren (72) umfassende Spurbereiche unterteilt ist und bei der Mittel zur Grob- und Feinpositionierung vorgesehen sind, die im Zusammenwirken mit einer Detektoranordnung (11) zum Erzeugen von Spurfehler- und Fokusfehlersignalen sowie einer Steuereinheit (12) eine Regelschleife bilden, wobei zur Grobpositionierung des Lichtstrahles auf einen Spurbereich ein Drehspiegel (5) und zur Feinpositionierung auf eine Datenspur (72) eine radial verschiebbare Abtasteinheit (6n) verwendet wird, wobei der Drehspiegel (5) seitlich versetzt zur Drehachse der Speicherplatte (7) angeordnet ist, dadurch gekennzeichnet, daß über jedem der n Spurbereiche eine von n zur Feinpositionierung jeweils individuell radial verschiebbaren Abtasteinheiten (6n) vorgesehen ist, wobei der im Strahlengang des Laserlichtstrahles zwischen der Laserlichtquelle (1) und den Abtasteinheiten (6n) angeordnete Drehspiegel (5) den Lichtstrahl auf die dem ausgewählten Spurbereich zugeordnete Abtasteinheit ablenkt, die auf den Drehmittelpunkt des Drehspiegels (5) ausgerichtet, mit regelmäßigen seitlichen Abständen zueinander auf einem Kreisabschnitt bezüglich der Drehachse des Drehspiegels angeordnet sind, wobei der Radius (R) dieses Kreisabschnittes größer ist als der maximale Radius der Datenspuren (72) auf der Speicherplatte (7).

2. Positioniereinrichtung nach Anspruch 1, dadurch gekennzeichnet, daß jede Abtasteinheit (6n) ein dem Drehspiegel (5) zugewandtes optisches Element (610) zum Ablenken des Lichtstrahles und ein auf die Speicherplatte (7) ausgerichtetes optisches Abbildungssystem (611) enthält.

3. Positioniereinrichtung nach Anspruch 2, dadurch gekennzeichnet, daß jeder Abtasteinheit (6n) zum radialen Verschieben individuell ein durch Feinpositioniersignale (FOS) gesteuerter Antrieb zugeordnet ist, dessen überwiegende Masse gestellfest angeordnet ist.

4. Positioniereinrichtung nach Anspruch 2, dadurch gekennzeichnet, daß der jeder Abtasteinheit (6n) zugeordnete lineare Antrieb als ein Tauchspulsystem (612, 613) mit ortsfest angeordnetem Tauchspulmagneten ausgebildet ist.

5. Positioniereinrichtung nach einem der Ansprüche 1 bis 4, dadurch gekennzeichnet, daß die Abtasteinheiten (6n) in nur einem Freiheitsgrad lediglich radial zum Drehspiegel (5) verschiebbar angeordnet sind und im Strahlengang des Laserstrahles eine Fokussieroptik (3) vorgesehen ist, die ein teilweise im Strahlengang parallel verschiebbares optisches System (31, 32) zum Verändern der Divergenz des Laserlichtstrahles und damit zum Verlagern des Fokus des Laserlichtstrahles gegenüber der Speicherplatte (7) aufweist.

6. Positioniereinrichtung nach Anspruch 5, dadurch gekennzeichnet, daß die Fokussieroptik (3) aus zwei sammelnden Abbildungselementen (31 bzw.

32) aufgebaut ist, von denen das eine (z.B. 32) gestellfest und das andere (z.B. 31) dazu linear verschiebbar angeordnet ist.

7. Positioniereinrichtung nach Anspruch 6, dadurch gekennzeichnet, daß die Fokussieroptik (3) aus einem sammelnden Abbildungselement (36) in gestellfester Anordnung und aus einem divergierenden Abbildungselement (35) aufgebaut ist, das im Strahlengang vor dem sammelnden Abbildungselement und gegenüber diesem linear verschiebbar angeordnet ist.

8. Positioniereinrichtung nach Anspruch 6 oder 7, dadurch gekennzeichnet, daß die Fokussieroptik (3) neben dem optischen Abbildungssystem zum Bewegen des verschiebbar angeordneten Abbildungselementes (31 bzw. 36) eine Tauchspulanordnung mit einem gestellfest angeordneten Spulemagneten (33 bzw. 37) und einem mit dem verschiebbaren Abbildungselement fest verbundenen Anker (34 bzw. 38) aufweist.

## Claims

1. Positioning device for an optical disk memory, in which the light beam of a laser light source (1) is focused on a selected data track (72) of an optical memory disk (7) which is divided into n concentric track regions in each case comprising a multiplicity of data tracks (72) and in which means for coarse and fine positioning are provided which form a control loop in cooperation with a detector arrangement (11) for generating track error and focus error signals and with a control unit (12), a rotatable reflector (5) being used for coarse positioning of the light beam on a track region and a radially displaceable scanning unit (6n) being used for fine positioning on a data track (72), the rotary reflector (5) being arranged laterally offset in relation to the rotary axis of the memory disk (7), characterized in that over each of the n track regions one of n scanning units (6n) for fine positioning which are in each case individually radially displaceable is provided, the rotary reflector (5) arranged in the beam path of the laser light beam between the laser light source (1) and the scanning units (6n) deflecting the light beam onto the scanning unit associated with the selected track region, which scanning units are aligned with the centre of rotation of the rotary reflector (5) and are arranged at regular lateral intervals to one another on a segment of a circle in relation to the axis of rotation of the rotary reflector, the radius (R) of this segment of a circle being larger than the maximum radius of the data tracks (72) on the memory disk (7).

2. Positioning device according to Claim 1, characterized in that each scanning unit (6n) contains, facing the rotary reflector (5), an optical element (610) for deflecting the light beam and an optical imaging system (611) aligned with the memory disk (7).

3. Positioning device according to Claim 2, characterized in that a drive controlled by fine positioning signals (FOS) is associated with each scanning unit (6n) for the purpose of radial displacement, the overwhelming mass of said drive being arranged fixed to the frame.

4. Positioning device according to Claim 3, characterized in that the linear drive associated with each scanning unit (6n) is constructed as a plunger coil system (612, 613) with fixed plunger coil magnet.

5. Positioning device according to one of Claims 1 to 4, characterized in that the scanning units (6n) are arranged to be solely radially displaceable in relation to the rotary reflector (5) in only one degree of freedom, and a focusing optical system (3) is provided in the beam path of the laser beam, said focusing optical system having an optical system (31, 32), which is partially displaceable in parallel in the beam path, for changing the divergence of the laser light beam and thus for displacing the focus of the laser light beam in relation to the memory disk (7).

6. Positioning device according to Claim 5, characterized in that the focusing optical system (3) is constructed from two collecting imaging elements (31 and 32 respectively), of which the one (e.g. 32) is fixed to the frame and the other (e.g. 31) is arranged to be linearly displaceable in relation thereto.

7. Positioning device according to Claim 6, characterized in that the focusing optical system (3) is construct of a collecting imaging element (36) in an arrangement fixed to the frame and of a diverging imaging element (35) which is arranged in the beam path in front of the collecting imaging element and to be linearly displaceable in relation to the latter.

8. Positioning device according to Claim 6 or 7, characterized in that the focusing optical system (3) has, in addition to the optical imaging system for moving the displaceably arranged imaging element (31 and 36 respectively), a plunger coil arrangement with a coil magnet (33 and 37 respectively) arranged fixed to the frame and an armature (34 and 38 respectively) permanently connected to the displaceable imaging element.

## Revendications

1. Dispositif de positionnement pour une mémoire à disques optiques, dans lequel le faisceau de lumière d'une source de lumière laser (1) est focalisé sur une piste de données sélectionnée (72) d'un disque de mémoire optique (7), qui est subdivisé en n zones concentriques de pistes, qui englobent chacune une multiplicité de pistes de données (72), et dans lequel il est prévu des moyens pour réaliser un positionnement approché et un positionnement précis, qui forment, en coopération avec un dispositif de détection (11) servant à produire des signaux d'erreur de piste et des signaux d'erreur de focalisation ainsi qu'avec une unité de commande (12), une boucle de régulation, et dans lequel pour réaliser le positionnement approché du faisceau de lumière sur une zone de piste, on utilise un miroir rotatif (5) et pour le positionnement précis sur une piste de données (72), on utilise une unité d'exploration (6n) déplaçable radialement, le miroir rotatif (5) étant monté en étant décalé radialement par rapport à l'axe de rotation du disque de mémoire (7), caractérisé par le fait qu'au-dessus de chacune des n zones de pistes, il est prévu une parmi n unités d'exploration (6n) déplaçables radialement respectivement individuellement pour le positionnement précis, auquel cas le miroir rotatif (5) disposé dans le trajet du faisceau de lumière laser entre la source de lumière laser (1) et les unités d'exploration (6n), dévie le faisceau de lumière en direction de l'unité d'exploration qui est associée à la zone de piste sélectionnée, les unités d'exploration (6n) étant disposées à des distances latérales réciproques uniformes sur une section de cercle en étant alignées sur le centre de rotation du miroir rotatif (5), le rayon (R) de cette section de cercle étant supérieur au rayon maximum des pistes de données (73) situées sur la plaque de mémoire (7).

2. Dispositif de positionnement suivant la revendication 1, caractérisé par le fait que chaque unité d'exploration (6n) contient un élément optique (610) associé au miroir rotatif (5) et servant à faire dévier le faisceau de lumière, et un système optique de formation d'images (611), dirigé sur le disque de mémoire (7).

3. Dispositif de positionnement suivant la revendication 2, caractérisé par le fait que chaque unité d'exploration (6n) est associée individuellement, pour son déplacement radial, à un dispositif d'entraînement qui est commandé par des signaux de positionnement précis (FOS) et dont la masse prépondérante est montée de manière à être fixe par rapport au châssis.

4. Dispositif de positionnement suivant la revendication 3, caractérisé par le fait que le dispositif d'entraînement linéaire associé à chaque unité d'exploration (6n) est réalisé sous la forme d'un système à noyau plongeur (72, 73) comportant un aimant à noyau plongeur monté fixe.

5. Dispositif de positionnement suivant l'une des revendications 1 à 4, caractérisé par le fait que les unités d'exploration (6n) sont disposées de manière à être déplaçables uniquement selon un degré de liberté simplement radialement par rapport au miroir rotatif (5) et que dans le trajet du faisceau laser il est prévu un dispositif optique de focalisation (3), qui comporte un système optique (31, 32) déplaçable parallèlement en partie dans le trajet du faisceau et sert à modifier la divergence de lumière laser et par conséquent à décaler le foyer du faisceau de lumière laser par rapport au disque de mémoire (7).

6. Dispositif de positionnement suivant la revendication 5, caractérisé par le fait que le dispositif optique de focalisation (3) est constitué de deux éléments convergents de formation d'images (31 ou 32), dont l'un (par exemple 32) est monté fixe par rapport au châssis et dont l'autre (par exemple 31) est monté à être déplaçable linéairement par rapport au précédent.

7. Dispositif de positionnement suivant la revendication 6, caractérisé par le fait que le dispositif optique de focalisation (3) est constitué par un élément convergent de formation d'images (36) monté fixe par rapport au châssis et par un élément divergent de formation d'images (35), qui est disposé dans le trajet du rayonnement en avant de l'élément convergent de formation d'images et de manière à être déplaçable linéairement par rapport à cet élément.

8. Dispositif de positionnement suivant les revendications 6 ou 7, caractérisé par le fait que le dispositif optique de focalisation (3) comporte, en dehors du système optique de formation d'images, pour le déplacement de l'élément mobile de formation d'images (31 ou 36), un dispositif à noyau plongeur possédant un aimant à bobine (33 ou 37) monté fixe sur le châssis, et une armature (34 ou 38) reliée rigidement à l'élément mobile de formation d'images.

# FIG1

FIG 2

FIG 3

FIG 4